# EUROPEAN PATENT SPECIFICATION

(11) **EP 1 969 928 B1**
(45) Date of publication and mention of the grant of the patent: **01.08.2012**
(21) Application number: 06843254.1
(22) Date of filing: 26.12.2006
(51) Int. Cl.: A01N 1/00, A01N 25/06, A01N 61/00, A61G 17/04

(54) **COMPOSITION FOR DEAD BODY TREATMENT AND METHOD OF TREATING**
ZUSAMMENSETZUNG ZUR BEHANDLUNG TOTER KÖRPER UND BEHANDLUNGSVERFAHREN
COMPOSITION POUR TRAITEMENT DE CORPS MORT ET PROCEDE DE TRAITEMENT

(30) Priority: 04.01.2006 JP 2006000293; 22.12.2006 JP 2006345549
(43) Date of publication of application: 17.09.2008
(73) Proprietor: Azex Corporation, Mie, 5100944 (JP)
(72) Inventor: KATO, Masahiko, Mie 510-0944 (JP); OHNISHI, Kazuko, Mie 514-0008 (JP); KITAYAMA, Etsuko, Mie 514-0300 (JP)
(74) Representative: Bankes, Stephen Charles Digby
(86) International application number: PCT/JP2006/325870
(87) International publication number: WO 2007/077815

(56) References cited:
- WO-A1-2004/093540
- JP-A- 2001 089 301
- JP-A- 2002 053 401
- JP-A- 2002 087 902
- DATABASE WPI Week 199823 Thomson Scientific, London, GB; AN 1998-254565 XP002635938, & JP 10 080471 A (AZEX KK) 31 March 1998 (1998-03-31)
- DATABASE WPI Week 200282 Thomson Scientific, London, GB; AN 2002-756291 XP002635939, & JP 2002 315792 A (AZEX KK) 29 October 2002 (2002-10-29)
- DATABASE WPI Week 200223 Thomson Scientific, London, GB; AN 2002-174977 XP002635940, & JP 2001 335468 A (CHUGAI PHARM CO LTD) 4 December 2001 (2001-12-04)

## Description

### Field of the invention

This invention relates to prevention of bodily fluids leakage from a corpse. It relates to corpse-treatment composition that is able to prevent bodily fluids leakage from a corpse by quick jelling (gelation) without laborious work and in the same time to prevent bacteria in a corpse from propagating with the effect of deodorization and retardation of putrefaction. It also relates to the corpse-treatment method to inject this corpse-treatment composition into a corpse easily.

### Background of the invention

The present inventor has got an idea to employ superabsorbent polymer for corpse-treatment, proposed a new corpse-treatment method and achieved utilization of the method. The superabsorbent polymer absorbs hundreds times as much water as self-weight and enables the water to gel. The method can be used instead of the conventional method to prevent bodily fluids leakage from a corpse by plugging cotton-wool in nose and mouth of a corpse.

First, in the following patent-document 1, there is proposed a method to prevent bodily fluids leakage from a corpse by injecting superabsorbent polymer packed in a syringe without a needle into nose and ears of a corpse.

Next, in the following patent-document 2, there is proposed the method to inject fine powder of superabsorbent polymer packed in a tube of soft polyvinyl chloride into a corpse quickly by gas pressure of gas spray-can using in order to raise workability.

The method proposed in the following patent-document 2 is utilized and esteemed. But it has following problems. Before treatment, caps on both ends of a tube are removed, one end of the tube is connected to the nozzle of a spray-can and the other end of the tube is inserted to the nose of a corpse. At that time, if inclining the tube too much downward, the fine powder of superabsorbent polymer might fall. And also, there is a problem of handling that the tube might be detached from the nozzle by the gas pressure at injection.

Besides, the tube of soft polyvinyl chloride stuffed with fine powder of superabsorbent polymer is covered with rubber caps and packaged in polyethylene bag to store. Fine powder of superabsorbent polymer might stick together by moisture during storage and it might become difficult to be inserted by gas pressure. So, there is a problem to store for a long time. It is considered that moisture not only in the bag but also absorbed on the tube of soft polyvinyl chloride causes the problem.

Other than this inventor, as shown in the following patent-document 3, there is a proposal that superabsorbent polymer is dispersed in the solvent such as ethanol to a jelly state and it is stuffed in a syringe to store. The problem of cohesion in storing is solved in this method. But as solvent is surrounding superabsorbent polymer, the bodily fluids take long time to gel when the superabsorbent polymer comes contact with the bodily fluids in a corpse. As it is much more severe problem, it cannot solve the above problems essentially.
[Patent document 1] JP1998-298001A
[Patent document 2] JP2002-315792A
[Patent document 3] JP2002-275001A
[Patent document 4] JP3456848B

### Disclosure of the invention

### Problem to be solved by the invention

The present invention is contrived, solving the above-mentioned former problems, to provide comprehensively excellent composition and treatment method to prevent bodily fluids leakage from a corpse. The corpse-treatment composition can be stored for a long time despite employment of fine powder of superabsorbent polymer. It can be easily injected into a corpse with gas pressure when used. It can surely prevent bodily fluids leakage from a corpse as it swells quickly when it contacts bodily fluids.

### Means to solve the problem

The corpse-treatment composition of this invention is in the suspension state that fine powder of superabsorbent polymer to enable water to gel is dispersed in liquefied gas with dissolved essential oil or vegetable oil in an aerosol-can.

The corpse-treatment method to prevent bodily fluids leakage from a corpse of this invention is the method that corpse-treatment composition in the suspension state that fine powder of superabsorbent polymer to enable water to gel is dispersed in liquefied gas with dissolved essential oil or vegetable oil is injected into a corpse in an aerosol state.

### Advantages of the invention

According to the corpse-treatment composition of this invention, the coefficient of viscosity of liquefied gas becomes high as the composition is enclosed with an aerosol-can with fine powder of superabsorbent polymer to enable water to gel mixed in liquefied gas with dissolved essential oil or vegetable oil. Therefore, a margin can be given at treatment time, as the suspension state is maintainable for a long time when the aerosol-can is shaken once and fine powder of superabsorbent polymer is dispersed.

According to the composition enclosed with an aerosol-can as fine powder of superabsorbent polymer is mixed in liquefied gas with dissolved essential oil, leakage of bodily fluids can be prevented and propagation of bacteria in a corpse can be suppressed. Resultantly, deodorization and retardation of putrefaction can be achieved.

According to the corpse-treatment method of this invention, handling becomes easier comparing with conventional method to handle the raw fine powder of superabsorbent polymer and the corpse-treatment of prevention of bodily fluids leakage from a corpse can be easily performed without skill. It is the reason why the suspension can be gushed in a uniform aerosol state as fine powder gets high fluidity in the way that fine powder of superabsorbent polymer is dispersed in an aerosol-can.

Formerly, injection treatment of deodorant and retardation of putrefaction was carried out apart from the treatment of prevention of bodily fluids leakage. In this invention, the deodorant and retardation of putrefaction are beforehand added to suspension of fine powder of superabsorbent polymer to prevent bodily fluids leakage. Thereby, the treatment of prevention of bodily fluids leakage and the treatment of deodorization and retardation of putrefaction can be finished at once, and then efficiency can be increased.

Moreover, according to the corpse-treatment method of this invention, the following three effects are achieved.
(1) The fine powder of superabsorbent polymer flows with gas pressure in a tube connected to a nozzle of an aerosol-can and it is injected into a corpse. Therefore, the tube does not separate by the pressure of aerosol since the inside of the tube is empty and there is no resistance.
(2) Superabsorbent polymer does not come out of the can unless a push button is pushed. There is no fear of failure that fine powder of superabsorbent polymer leaks out even though the tube is leaned downward when the tube is inserted in a corpse. Handling becomes very easy and time of treatment is shortened. And also failure would substantially disappear.
(3) Fine powder of superabsorbent polymer is enclosed with an aerosol-can in the state that it is intercepted completely from the moisture of the open air. It is kept dispersed in non-hygroscopic liquefied gas. Therefore, it would substantially never cohere during storage and it can be stored for a long time.

### The most preferable embodiment of the invention

Aerosol composition of this invention is suspension of fine powder of superabsorbent polymer dispersed in the solution of essential oil or vegetable oil as solute in solvent of liquefied gas.

The kind of superabsorbent polymer employed in the aerosol composition of this invention is not in particular restricted in so far as it can absorb more than about hundred times as much water as self-weight. But, from a viewpoint of spraying to aerosol, spherical fine powder is desirable. Modified sodium polyacrylate, copolymer of vinyl alcohol and acrylic acid, and modified starch are suitable for superabsorbent polymer.

"Aerosol" described here does not necessarily mean strict aerosol. It is expressed as the state that fine powder of superabsorbent polymer spouts with the evaporated liquefied gas.

The particle diameter of fine powder of superabsorbent polymer employed in this invention is not in particular specified since it is influenced by the size of the stem orifice of the valve for aerosolization. In case that the diameter of the stem orifice is about 0.5mm, the particle diameter to pass 150mesh filter is desirable.

There is no restrictions in particular also about liquefied gas. LPG, butane, chlorofluocarbon, dimethyl ether (DME), and these mixtures can be used for it. However, dimethyl ether requires cautions so that a small amount of moisture may be included and superabsorbent polymer may not flocculate. Moreover, since spray pressure of chlorofluocarbon is high, workability is not so good. LPG and butane have no problem in particular except inflammability and they are most suitable.

If solid fine powder in liquefied gas has precipitated at the bottom of an aerosol can, only liquefied gas spouts first when the push button of the aerosol can is pushed. Subsequently, high-concentration suspension spouts. Therefore, the nozzle of the aerosol-can tends to be blocked. It is necessary to shake well before pushing the push button of the aerosol can. It is for making inner liquid as uniform suspension. It is the well-known practice of the usage of solid aerosol.

Moreover, it is necessary to make small enough the particle diameter of the fine powder of superabsorbent polymer in order to keep the uniform suspension for a long time dispersing the fine powder of superabsorbent polymer well in liquefied gas. If particle diameter is about 4 micrometers, uniform suspension can be maintained for about 5 seconds. However, still longer period of uniform suspension is desirable for corpse treatment.

Then, it is known to add a little amount of dispersant in order to keep uniform suspension for a long time. Examples of well-known dispersants are surface-active agents, such as sorbitan sesquioleate, polyoxyethylene glycol monoisostearate etc, and isopropyl myristate, mineral oil, lecithin, scqualan etc. Thus uniform suspension will be kept as long as about 30 seconds with adding dispersant and a margin will arise in treating. Moreover, superabsorbent polymer fine powder with a little larger diameter also becomes usable.

However, the nozzle of the aerosol-can may be blocked as the fine powder of superabsorbent polymer coheres when dispersant contains even a little moisture. Moreover, fine powder of superabsorbent polymer dispersed in liquefied gas tends to sediment since liquefied gases, such as LPG, butane, chlorofluocarbon and dimethyl ether, have small specific gravity and low viscosity.

Then, the followings are enclosed with a transparent pressure-resistant container. Liquefied gas (40mL of LPG), essential oil (10mL of a mixture of methyl salicylate and camphor oil, mass ratio = 1/1), and superabsorbent polymer powder [30g of Sanfresh ST-500MPSA (made by San-Dia Polymers, Ltd.)]. It is shaken well and it is left alone as superabsorbent polymer powder is dispersed. As its result, it is ascertained that the suspension of fine powder of superabsorbent polymer dispersed in liquefied gas is maintained for more than 30 seconds.

In order to contrast, the followings are enclosed with the transparent pressure-resistant container. Liquefied gas (40mL of LPG) and superabsorbent polymer powder [30g of Sanfresh ST -500MPSA (made by San-Dia Polymers, Ltd.)] only. However, it is not dispersed uniformly unless it is shaken very vigorously. Suspension is maintained only about 5 seconds.

Viscosity of liquefied gas becomes high when essential oil is dissolved in liquefied gas as this. It is considered that sedimentation of mixed fine powder of superabsorbent polymer is controlled by essential oil. Then, methyl salicylate, camphor oil, peppermint oil and limonene are experimented independently in the same way. As a result, it is ascertained that sedimentation of fine powder of superabsorbent polymer is controlled.

Essential oil can kill or retard bacteria, mold, parasites and insects etc. It is used as a deodorant for a corpse as this inventor indicated with the above-mentioned patent-documents 4. Essential oil acts as deodorant and retardation of putrefaction. Essential oil can prevent a corpse from decomposing in the period to cremation without dry ice.

Also, vegetable oils (soybean oil, sesame oil, rapeseed oil, salad oil) are tested in the same experiment. It is ascertained that sedimentation of fine powder of superabsorbent polymer can be controlled. Therefore, inexpensive vegetable oil may be used when deodorization of a corpse and control of decomposition are not necessary.

Sedimentation depressant is not restricted in particular so far as it dissolves and disperses in liquefied gas, moisture is not included and it is harmless for men and beasts.

As for a valve of an aerosol can, it is effective to employ powder valve with a stem having raking means by stem-rubber. Even the ordinal valve can spout suspension satisfactory according with the combination of pore size of stem orifice and the particle diameter of superabsorbent polymer. The valve with raking means can be used stably in a wide range combination of stem-orifice diameter of the valve and particle diameter of superabsorbent polymer.

The sequence of corpse-treatment is as follows.
(1) A soft polyvinyl-chloride tube is connected to a nozzle of an aerosol can to prepare so that suspension can be spouted inside a corpse.
(2) The aerosol-can should be shaken well.
(3) An end of the tube is inserted in the mouth of the corpse by about 2cm and then the push button of the aerosol can is pushed for 1 or 2 seconds.
(4) The tube is extracted from the mouth of the corpse.
(5) After this, the above-mentioned treatments from (2) to (4) are similarly repeated for each part.

In addition, though an operator may connect the tube to a nozzle of an aerosol can at operation, if it is connected beforehand in the manufacture stage, the burden of the operator is reducible. The substance of a tube is not restricted in particular as long as flexible and suitable for insertion. Transparent, inexpensive and soft polyvinyl chloride is desirable for a tube.

Hereinafter, the embodiments of this invention are explained. The described treatments of corpses were carried out by the specialists in a university hospital.

### (Embodiment 1)

30g of Sanfresh ST-500MPSA (made by San-Dia Polymers, Ltd.) and 10mL of deodorant and retardation of putrefaction (a mixture of methyl salicylate and camphor oil, mass ratio = 1/1) are contained in an aerosol-can of tinwork AE100YN45. C(B)31644(0.5x2)x082 valve (powder valve made by Maruichi Co. Ltd.) is set in. 40mL of LPG is filled in the can. Then a push button is attached.

An end of a tube is connected to the nozzle of this aerosol can. The tube is made of soft polyvinyl chloride with 3mm of inner diameter and 6mm of outer diameter. The other end of the tube is inserted about 2cm into the nose of a corpse. A push button is pushed once at this state. Then, the aerosolized mixture of superabsorbent polymer and deodorant and retardation of putrefaction can be injected in the corpse smoothly. This operation has good workability. Moreover, sufficient effect to prevent bodily fluids leakage from a corpse can also be ascertained. In addition, generation of putrid smell is not sensed even without dry ice in a summer for three days until cremation.

### (Embodiment 2)

Here is prepared aerosol in which 0.5mL of soybean oil is added instead of the mixture of methyl salicylate and camphor oil of embodiment 1.

The following model experiment is performed in order to ascertain the effect. A tube is connected to the prepared aerosol can. An end of the tube is inserted into a plastic (PET: polyethylene terephthalate) bottle with 500mL of water. A push button is pushed to check whether bodily fluids leakage from a corpse can be squirted or not, and, water may gel or not. The result of the experiment is that suspension can be squirted satisfactory even left for 30 seconds after shaken strongly and the water in a plastic (PET) bottle is geld.

### (Embodiment 3)

Here is prepared aerosol in which 0.2g of mineral oil is added instead of the mixture of methyl salicylate and camphor oil of embodiment 1. An experiment is performed same as the embodiment 2. Suspension can be squirted satisfactory even left for 30 seconds after shaken strongly and the water in a plastic (PET) bottle is geld.

### (Embodiment 4)

Here is prepared aerosol in which 0.2g of lanolin is added instead of the mixture of methyl salicylate and camphor oil of embodiment 1. An experiment is performed same as the embodiment 2. Suspension can be squirted satisfactory even left for 30 seconds after shaken strongly and the water in a plastic (PET) bottle is geld.

## Claims

1. Corpse-treatment composition to prevent bodily fluids (or humor) leakage from a corpse **characterized in that** fine powder of superabsorbent polymer to enable water to gel is dispersed in liquefied gas with dissolved essential oil in an aerosol-can.

2. Corpse-treatment composition described in claim 1, wherein the essential oil is a mixture of methyl salicylate and camphor oil.

3. Corpse-treatment composition to prevent bodily fluids leakage from a corpse **characterized in that** fine powder of superabsorbent polymer to enable water to gel is dispersed in liquefied gas with dissolved vegetable oil in an aerosol-can.

4. Corpse-treatment composition described in either of claim 1 or 3, wherein superabsorbent polymer is modified sodium polyacrylate.

5. Corpse-treatment method to prevent bodily fluids leakage from a corpse **characterized in that** corpse-treatment composition in the state that fine powder of superabsorbent polymer to enable water to gel is dispersed in liquefied gas with dissolved essential oil is injected into a corpse in an aerosol state.

6. Corpse-treatment method to prevent bodily fluids leakage from a corpse described in claim 5, wherein the essential oil is a mixture of methyl salicylate and camphor oil.

7. Corpse-treatment method to prevent bodily fluids leakage from a corpse **characterized in that** corpse-treatment composition in the suspension state that fine powder of superabsorbent polymer to enable water to gel is dispersed in liquefied gas with dissolved vegetable oil is injected into a corpse in an aerosol state.

8. Corpse-treatment method to prevent bodily fluids leakage from a corpse described in either of claim 5 or 7, wherein the superabsorbent polymer is modified sodium polyacrylate.

## Patentansprüche

1. Zusammensetzung zur Behandlung von Leichen zur Verhinderung des Austritts von Körperflüssigkeiten (oder Humor) aus einem Leichnam, **dadurch gekennzeichnet, dass** feines Pulver eines superabsorbierenden Polymeren zur Ermöglichung der Gelierung von Wasser in verflüssigtem Gas mit darin gelöstem essentiellen Öl in einer Aerosoldose dispergiert ist.

2. Zusammensetzung zur Behandlung von Leichen nach Anspruch 1, wobei es sich beim essentiellen Öl um ein Gemisch aus Methylsalicylat und Kampferöl handelt.

3. Zusammensetzung zur Behandlung von Leichen zur Verhinderung des Austritts von Körperflüssigkeiten aus einem Leichnam, **dadurch gekennzeichnet, dass** feines Pulver eines superabsorbierenden Polymeren zur Ermöglichung der Gelierung von Wasser in verflüssigtem Gas mit darin gelöstem pflanzlichen Öl in einer Aerosoldose dispergiert ist.

4. Zusammensetzung zur Behandlung von Leichen nach Anspruch 1 oder 3, wobei es sich beim superabsorbierenden Polymeren um modifiziertes Natriumpolyacrylat handelt.

5. Verfahren zur Behandlung von Leichen zur Verhinderung des Austritts von Körperflüssigkeiten aus einem Leichnam, **dadurch gekennzeichnet, dass** eine Zusammensetzung zur Behandlung von Leichen in einem solchen Zustand, dass feines Pulver eines superabsorbierenden Polymeren zur Ermöglichung der Gelierung von Wasser in verflüssigtem Gas mit darin gelöstem essentiellen Öl dispergiert ist, im Aerosolzustand in einen Leichnam injiziert wird.

6. Verfahren zur Behandlung von Leichen zur Verhinderung des Austritts von Körperflüssigkeiten aus einem Leichnam nach Anspruch 5, wobei es sich beim essentiellen Öl um ein Gemisch aus Methylsalicylat und Kampferöl handelt.

7. Verfahren zur Behandlung von Leichen zur Verhinderung des Austritts von Körperflüssigkeiten aus einem Leichnam, **dadurch gekennzeichnet, dass** eine Zusammensetzung zur Behandlung von Leichen in einem solchen Suspensionszustand, dass feines Pulver eines superabsorbierenden Polymeren zur Ermöglichung der Gelierung von Wasser in verflüssigtem Gas mit darin gelöstem pflanzlichen Öl dispergiert ist, im Aerosolzustand in einen Leichnam injiziert wird.

8. Verfahren zur Behandlung von Leichen zur Verhinderung des Austritts von Körperflüssigkeiten aus einem Leichnam nach Anspruch 5 oder 7, wobei es sich beim superabsorbierenden Polymeren um modifiziertes Natriumpolyacrylat handelt.

## Revendications

1. Composition de traitement d'un cadavre pour empêcher une fuite de fluides corporels (ou humeur) d'un cadavre, **caractérisée en ce qu'**une poudre fine de polymère à fort pouvoir absorbant permettant à l'eau de se transformer en gel est dispersée dans un gaz liquéfié avec une huile essentielle dissoute dans un générateur d'aérosol.

2. Composition de traitement d'un cadavre telle que décrite à la revendication 1, dans laquelle l'huile essentielle est un mélange de salicylate de méthyle et d'huile de camphre.

3. Composition de traitement d'un cadavre pour empêcher une fuite de fluides corporels d'un cadavre, **caractérisée en ce qu'**une poudre fine de polymère à fort pouvoir absorbant permettant à l'eau de se transformer en gel est dispersée dans un gaz liquéfié avec une huile végétale dissoute dans un générateur d'aérosol.

4. Composition de traitement d'un cadavre telle que décrite soit à la revendication 1, soit à la revendication 3, dans laquelle le polymère à fort pouvoir absorbant est du polyacrylate de sodium modifié.

5. Procédé de traitement d'un cadavre pour empêcher une fuite de fluides corporels d'un cadavre, **caractérisé en ce qu'**une composition de traitement d'un cadavre sous la forme d'une poudre fine de polymère à fort pouvoir absorbant permettant à l'eau de se transformer en gel qui est dispersée dans un gaz liquéfié avec une huile essentielle dissoute est injectée dans un cadavre sous la forme d'un aérosol.

6. Procédé de traitement d'un cadavre pour empêcher une fuite de fluides corporels d'un cadavre décrit à la revendication 5, dans lequel l'huile essentielle est un mélange de salicylate de méthyle et d'huile de camphre.

7. Procédé de traitement d'un cadavre pour empêcher une fuite de fluides corporels d'un cadavre, **caractérisé en ce qu'**une composition de traitement d'un cadavre sous la forme d'une suspension de poudre fine de polymère à fort pouvoir absorbant permettant à l'eau de se transformer en gel qui est dispersée dans un gaz liquéfié avec une huile essentielle dissoute est injectée dans un cadavre sous la forme d'un aérosol.

8. Procédé de traitement d'un cadavre pour empêcher la fuite de fluides corporels d'un cadavre décrit soit à la revendication 5, soit à la revendication 7, dans lequel le polymère à fort pouvoir absorbant est du polyacrylate de sodium modifié.
